**Europäisches Patentamt**

(19) **European Patent Office**

**Office européen des brevets**

(11) Publication number: **0 041 127**

**A1**

(12) **EUROPEAN PATENT APPLICATION**

(21) Application number: **81103130.1**

(22) Date of filing: **27.04.81**

(51) Int. Cl.³: **G 01 G 17/08**
**G 01 G 3/14**

(30) Priority: **29.05.80 US 154568**

(43) Date of publication of application:
**09.12.81 Bulletin 81/49**

(84) Designated Contracting States:
**DE FR GB IT**

(71) Applicant: **EATON CORPORATION**
**100 Erieview Plaza**
**Cleveland Ohio 44114(US)**

(72) Inventor: **Hamilton, Martin Wayne**
**24 W. Berkley Dr.**
**Arlington Hts. Illinois 60004(US)**

(74) Representative: **Wagner, Karl H.**
**P.O. Box 246 Gewuerzmuehlstrasse 5**
**D-8000 München 22(DE)**

(54) **Electromechanical scale.**

(57)   An electromechanical scale 10 is disclosed comprising an outer ground support frame 12 and a weighing platform 14 suspended with the ground support frame by a cantilever mounted load supporting bar 90. The load supporting bar has an upper 110, 112 and lower 114, 116 pair of strain gauges mounted on upper and lower surfaces 111, 115, respectively, of the bar and are vertically aligned and spaced a predetermined distance for sensing differential bending moments proportional to the applied weight of an article on the weighing platform. An articulated connection 100 between the weighing platform and the ground support frame transfers only vertical loading to the bar thus preventing extraneous loads from affecting the strain input to the gauges. The gauges are wired in a bridge circuit which has an output connected to an appropriate electrical read-out device.

FIG. 1

1

## ELECTROMECHANICAL SCALE

BACKGROUND OF THE INVENTION

This invention relates to electromechanical weighing systems and is particularly suited to agricultural usage, for example, weighing small animals.

DESCRIPTION OF THE PRIOR ART

Weighing systems incorporating strain gauge load cells are known in the art for both industrial and agricultural weighing. One known compression cell installation comprises three compression type strain gauge load cells positioned intermediate a weighing platform and a ground support frame. Check rod assemblies are connected between the weighing platform and the ground support member and function to restrict horizontal motion of the weighing platform relative to the ground support frame. In this type of system the total load sensed is equal to the summation of sensed loads from each cell.

Other known systems using fewer than three compression load cells have, however, been used where lesser accuracy was required.

Tension load cell systems are also known and in widespread use. One such known system incorporates a single tension load cell suspended between an upper ground support frame and the structure being weighed. Mounting of the tension load cell generally requires internal threads on each end of the cell and associated connecting members such as eyes, rods, or forged eyes.

The disadvantage of the above described weighing systems is their prohibitively high cost when intended for agricultural use, as for example, in weighing small animals.

Thus, a need has arisen for a low cost, portable, small animal scale for use in an agricultural environment.

SUMMARY OF THE INVENTION

In the present invention an electromechanical scale is provided having a weighing platform suspended from a ground support frame by means of an articulated joint positioned between an upper structural member of the weigh platform and one end of a cantilever load bar. The load bar has a supported end mounted against a support block which is in turn mounted against a yoke member spanning adjacent upright frame portions of the ground support frame.

Horizontal translation of the lower end of the weigh platform is prevented by a check rod connected along the lower portion of each side of the generally rectangularly shaped platform. One end of each rod is connected to the ground support frame and the other end is connected to the weigh platform.

The cantilever load bar has upper and lower flat surfaces adjacent the free end thereof for attaching an upper and lower pair of strain gauges. The upper and lower pair of gauges are spaced apart a predetermined distance and also in vertical alignment. The gauges are wired in a bridge circuit arrangement with an output connectable to a conventional weight readout device.

The load receiving end of the load bar is defined by a cylindrical projection. A rod-end bearing of the type which provides articulated movement is received over the cylindrical projection and functions to transfer substantially vertical loading to the load bar, thus preventing the transfer of extraneous bending loads to the bar.

It is therefore an object of the invention to provide a weighing device which incorporates a single, low cost, cantilevered load bar which can accurately weigh loads applied to a weigh platform and positioned off center from the connection point of the platform to the weigh bar.

Other objects, features, and advantages of the present invention will be understood in greater detail from the following description and the associated drawings.

DETAILED DESCRIPTION

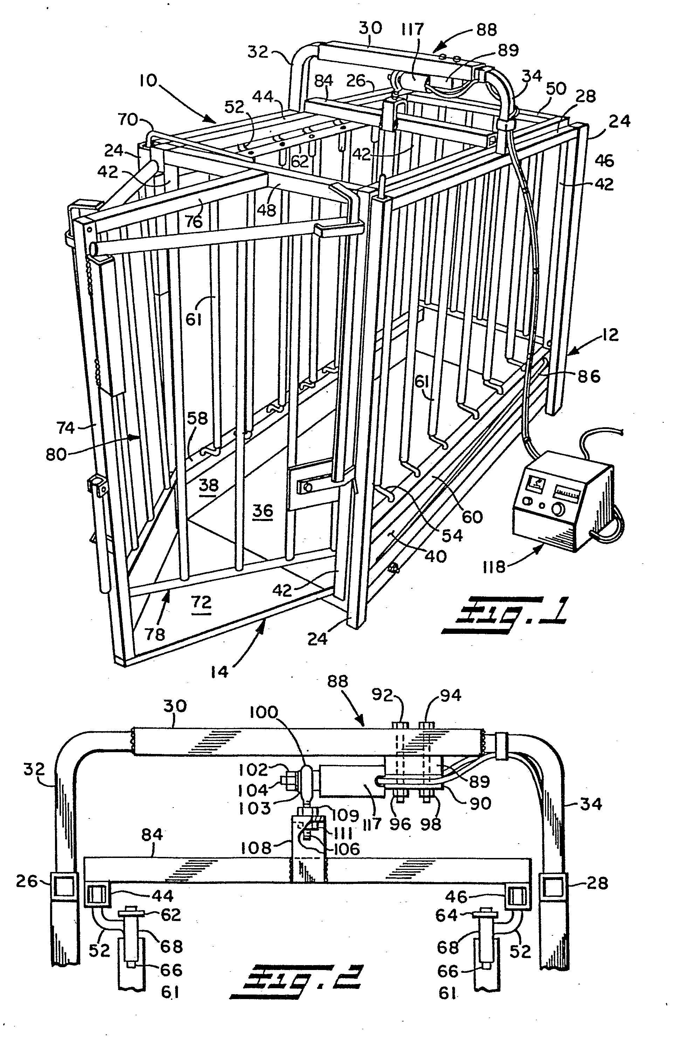

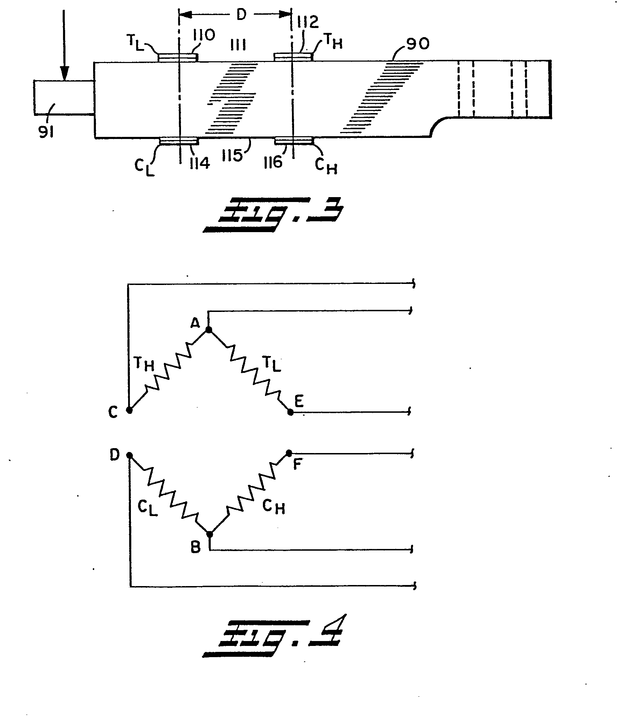

Referring now to Figs. 1 through 4, there is shown an electromechanical weighing system embodying the principles of the invention, indicated generally at 10, comprising a ground support frame (also designated as a support structure) indicated generally at 12, and a weighing platform (also designated as a weighing cage), indicated generally at 14, suspended by and disposed within the ground support frame. The device of Fig. 1 is symmetrical relative to a longitudinal plane and thus details not shown are substantially the same for both sides of the device. In the preferred form of the invention frame 12 is fabricated from square steel tubing and includes four lower horizontal members 16 (one shown by Fig. 1) welded between four vertical corner members 24 (three shown by Fig. 1). A pair of upper horizontal members 26 (one shown) are welded between vertical members 24, thus defining parallel side frame sections.

A yoke 30 has vertical leg portions 32, 34 which are welded to the top surfaces of horizontal members 26 midway along the lengths thereof.

Weighing platform 14 is of a welded construction and comprises a rectangularly shaped base plate 36 and side plates 38,40. Vertical corner members 42 are welded at the lower ends thereof to each corner of the base plate. Upper horizontal members 44, 46, 48, and 50 are welded between vertical members 42.

Upper radially extending arms 52 (shown partially by Fig.1) are pivotally mounted to upper horizontal members 44, 46. Lower radially extending arms 54 are pivotally mounted to horizontally extending tubes 58, 60 which are welded to the top surfaces of side plates 38, 40 respectively. The pivotal mounting is made by inserting a vertically extending right angle bend portion (not shown) of each arm into respective holes drilled in tubes 58, 60 and members 44, 46. Side bars 61 are connected between aligned upper and lower arms.

Horizontal links 62, 64 are pivototally connected to each side bar by means of downwardly extending pins 66 which are slidably received in tubular segments 68 welded to the upper ends of each side bar. This arrangement allows the barred side panels of the weigh platform to swing inwardly for adjusting the width of the cage and thereby limiting movement of an animal being weighed. A pair of hooks 70 (one shown partially by Fig. 1) are secured to the upper ends of numbers 42 and function to hold each side panel in its inward position.

The front portion of the weigh platform is also of a welded construction and comprises a triangular shaped base plate 72 welded to plate 36 and supported by a front vertical member 74 and a horizontal strut 76 which is welded between upper horizontal member 48 and vertical member 74. Barred gate panels, indicated generally at 78 and 80, are pivotally mounted to the front portion of the weigh platform to allow animal egress.

A rear barred panel, indicated generally at 82, is slidably mounted to the animal entrance end of the weigh platform.

A horizontal support beam 84 is welded to the top surfaces of upper horizontal members 26, 28 and is longitudinally aligned with yoke 30.

Stabilizer means in the form of four check rods (also designated as radius rods) 86 (one of which is shown by Fig. 1, are connected between each lower corner of the weighing platform and a position on the ground support frame. The rods extend along each of the four lower sides of the structure and are slightly inclined and arranged in a manner well known in the art to prevent horizontal movement of the weighing platform relative to the ground support frame. The check rods do allow vertical movement of the weigh platform relative to the ground support frame.

A cantilever load cell assembly, indicated generally at 88 is mounted between support beam 84 and yoke 30 and includes a mounting block 89 having an upper surface in abutment with the lower horizontal surface of yoke 30. A load support bar (also designated as a load bar) 90 has one end thereof in abutment with the lower surface of support mounting block 88 and is secured thereto by bolts 92, 94 which extend through yoke 30 and block 88 and clamped thereto by nuts 96, 98 respectively.

In the preferred form of the invention, a rod end bearing 100 is received over a cylindrical projection 91 (Fig. 3) on the end of bar 90 and secured thereto by a retaining cap 102 and locking screw 104. Bearing 100 has a threaded end 106 which extends through an opening in a U-shaped support member 108 which is welded to support beam 84. Bearing 100 includes an inner shaft engaging insert 103 received over projection 91. The outer surface of insert 103 is spherical, thus allowing articulation of threaded end 106 relative to projection. This articulated connection insures that only downward vertical loads are transferred to the projection end 91 of beam 90 which results in substantially pure bending of the beam in a vertical plane. It should be noted that alternative articulated connections linking weigh platform 14 to the cantilever beam can be substituted for the rod-end bearing without departing from the scope of the invention. Upper and lower nuts 109, 111 function to connect the threaded end of the rod end bearing to the extension member.

Referring to Fig. 3, a low stress tension strain gauge 110 ($T_L$) and a high stress tension strain gauge 112 ($T_H$) are mounted on a top horizontal surface 111 of load bar 90 and spaced apart a predetermined distance D. Located on a lower horizontal surface 115 of bar 90 are a low stress compression strain gauge 114 ($C_L$) and a high stress compression strain gauge 116 ($C_H$) also spaced apart the distance D and vertically aligned with gauges 110 and 112, respectively. Strain gauges 110, 112, 114, 116 are also designated as electrically energizable means.

As shown in Fig. 4, the strain gauges are wired in adjacent arms of a bridge circuit thereby providing a differential strain output proportional to the differential bending in the load bar. As is known in the art, the magnitude of the differential bending moment resisted by the beam between the gauges is independent of the application point of the load to the beam acting through the rod end bearing of cantilever bar 90.

The respective tension and compression gauges are connected into the bridge so as to have the differential strain signal from each pair of gauges additive. Additionally the high and low pair of strain gauges provide temperature compensation by reason of being in adjacent arms of the bridge circuit.

The bridge connections are completed in a manner well known in the art to a conventional weight read-out instrument of the type designed for strain gauge bridge transducers (also designated as circuit means) and indicated generally at 118 in Fig. 1. A tubular shield 117 is positioned over the gauges for protection.

In operation, as a load is applied to weighing platform 14, check rods 86 prevent any horizontal movement which might oridinarily occur with a single point suspension arrangement if the center of gravity of the load is off-set from a vertical line through rod end bearing 100. The entire vertical load less any frictional losses from check rod rotation is carried by the cantilever supported load bar 90. The articulated connection between the weigh platform and the load bar allows for a slight amount of platform rotation due to the check rod arrangement, thereby preventing extraneous side loading in a horizontal plane and/or torsion loading on the load beam which would introduce error into the strain sensed by the gauges. In resisting a downward load applied at the end of the bar, the top surface of the bar experiences tensile strain while the lower surface experiences compressive strain. The magnitude of the strains transferred to the gauges is then measured electrically by the bridge circuit of Fig. 4 where it is then converted , as stated above, to a load by a commercially available strain gauge read-out device.

The embodiment of the invention as shown and described above is representative of the inventive principles stated herein. It is to be understood that variations and departures can be made without, however, departing from the scope of the appended claims.

The invention may be summarized as follows:

Item 1. An electromechanical scale, said scale comprising:

(a) ground support means;

(b) a cantilever beam having a fixed end rigidly connected to said ground support means and an unsupported end, said beam having opposite surfaces loadable in tension and compression adapted for strain gauge mounting;

(c) platform means for supporting an article to be weighed;

(d) means for connecting said platform means to said cantilever beam unsupported end, said connecting means vertically aligned substantially through the center of gravity of said platform means, said connecting means transferring a vertically downward load to said beam unsupported end, said connecting means permitting multiangular displacement of said platform means about the point of said load transfer relative said ground support means;

(e) stabilizer means for limiting horizontal translation of said platform means relative to said ground support means;

(f) a first pair of strain gauges mounted on said tension upper surface of said beam and longitudinally spaced thereon a predetermined distance;

(g) a second pair of strain gauges mounted on said compression surface of said beam and longitudinally spaced thereon said predetermined distance, said first and second pair of gauges positioned intermediate said fixed end and said unsupported end of said beam for sensing, respectively, tensile and compressive strains in said beam; and

(h) circuit means for electrically comparing the strain level in each of said first and second pair of strain gauges, said circuit means having an electrical output proportional to said comparison and the load on said cantilever beam.

Item 2. The device as defined in item 1, wherein said connecting means includes a rod-end bearing connected to said unsupported end of said beam, said rod-end bearing permitting articulation of said platform means about said unsupported end.

Item 3. The device as defined in item 1, wherein,
(a) said platform means includes
(i) a base portion,
(ii) a plurality of vertical support members connected to said base and extending upwardly therefrom,
(iii) an upper frame portion connected to said vertical support members,
(iv) a beam extending across said upper frame portion, said suspension means connected to said beam at a point substantially through the center of gravity of said platform means.

Item 4. The device as defined in item 1, wherein
(a) said ground support means includes
(i) a base portion,
(ii) a first side frame portion extending upwardly from said base portion,
(iii) a second side frame portion extending upwarding from said base portion and disposed opposite and parallel to said first side frame portion,
(iv) a yoke portion connected across the upper ends of said first and second side frame portions, said cantilever beam having said fixed end connected to said yoke;

(b)   said connecting means linking said platform means to said cantilever beam unsupported end; and

(c)   said platform means disposed within said first and second side frame portions and said yoke portion, said platform means including,

(i)   a base portion,

(ii)   a plurality of vertical support members connected to said base and extending upwardly therefrom,

(iii)   an upper frame portion connected to said vertical support members,

(iv)   a beam extending across said upper frame portion, said suspension means connected to said beam at a point substantially through the center of gravity of said platform means.

Item   5.   The device as defined in   item 1, wherein said means for preventing horizontal movement of said platform means includes a plurality of check rods, each of said check rods connected at one end thereof to said ground support means and at the other end thereof to said platform means.

Item   6.   The device as defined in   item 1, further including means responsive to said electrical output for visually indicating the load on said beam.

Item   7.   A weighing device comprising:

(a)   support stucture,

(b)   a weigh bar contilevered from said support structure, said weigh bar having attachment means mounted for pivotal movement at the free end thereof;

(c)   a weighing cage pivotally suspended from said attachment means and adapted for receiving an object therein for weighing;

(d) stabilizer means operative to limit lateral movement and rotation about a vertical axis of said cage with respect to said support structure;

(e) electrically energizable means operative to sense, upon entry of an object to be weighed in said cage, the differential bending strain occurring in said cantilevered weigh bar between two longitudinal stations spaced a predetermined distance therealong and operable to provide, upon energization, a signal indicative of said differential strain; and,

(f) circuit means operable to receive said signal and provide an indication of the weight in said cage.

Item 8. The device defined in item 7, wherein said stabilizer means comprises at least one pair of spaced radius rods having one end of each pivotally attached to said support structure and the other end pivotally connected to said cage.

Item 9. The device defined in item 7, wherein said electrically energizable means includes a strain gauge located at each of said longitudinal stations.

Item 10. The device defined in item 7, wherein:

(a) said electrically energizable means includes a strain gauge located at each of said longitudinal stations; and,

(b) said circuit means includes means operative to provide a digital readout of said weight.

Item 11. The device defined in item 7, wherein said electrically energizable means includes strain gauges operative to sense the tension and compression strains at each of said longitudinal stations.

I CLAIM:

Claim 1.  An electromechanical scale, said scale comprising:

(a)  ground support means;

(b)  a cantilever beam having a fixed end rigidly connected to said ground support means and an unsupported end, said beam having opposite surfaces loadable in tension and compression adapted for strain gauge mounting;

(c)  platform means for supporting an article to be weighed;

(d)  means for connecting said platform means to said cantilever beam unsupported end, said connecting means vertically aligned substantially through the center of gravity of said platform means, said connecting means transferring a vertically downward load to said beam unsupported end, said connecting means permitting multiangular displacement of said platform means about the point of said load transfer relative said ground support means;

(e)  stabilizer means for limiting horizontal translation of said platform means relative to said ground support means;

(f)  a first pair of strain gauges mounted on said tension upper surface of said beam and longitudinally spaced thereon a predetermined distance;

(g)  a second pair of strain gauges mounted on said compression surface of said beam and longitudinally spaced thereon said predetermined distance, said first and second pair of gauges positioned intermediate said fixed end and said unsupported end of said beam for sensing, respectively, tensile and compressive strains in said beam; and

(h)  circuit means for electrically comparing the strain level in each of said first and second pair of strain gauges, said circuit means having an electrical output proportional to said comparison and the load on said cantilever beam.

Claim 2. The device as defined in claim 1, wherein said connecting means includes a rod-end bearing connected to said unsupported end of said beam, said rod-end bearing permitting articulation of said platform means about said unsupported end.

Claim 3. The device as defined in claim 1, wherein,
(a) said platform means includes
(i) a base portion,
(ii) a plurality of vertical support members connected to said base and extending upwardly therefrom,
(iii) an upper frame portion connected to said vertical support members,
(iv) a beam extending across said upper frame portion, said suspension means connected to said beam at a point substantially through the center of gravity of said platform means.

Claim 4. The device as defined in claim 1, wherein
(a) said ground support means includes
(i) a base portion,
(ii) a first side frame portion extending upwardly from said base portion,
(iii) a second side frame portion extending upwarding from said base portion and disposed opposite and parallel to said first side frame portion,
(iv) a yoke portion connected across the upper ends of said first and second side frame portions, said cantilever beam having said fixed end connected to said yoke;

(b)    said connecting means linking said platform means to said cantilever beam unsupported end; and

(c)    said platform means disposed within said first and second side frame portions and said yoke portion, said platform means including,

(i)    a base portion,

(ii)    a plurality of vertical support members connected to said base and extending upwardly therefrom,

(iii)    an upper frame portion connected to said vertical support members,

(iv)    a beam extending across said upper frame portion, said suspension means connected to said beam at a point substantially through the center of gravity of said platform means.

Claim 5.    The device as defined in claim 1, wherein said means for preventing horizontal movement of said platform means includes a plurality of check rods, each of said check rods connected at one end thereof to said ground support means and at the other end thereof to said platform means.

Claim 6.    The device as defined in claim 1, further including means responsive to said electrical output for visually indicating the load on said beam.

Claim 7.    A weighing device comprising:

(a)    support stucture,

(b)    a weigh bar contilevered from said support structure, said weigh bar having attachment means mounted for pivotal movement at the free end thereof;

(c)    a weighing cage pivotally suspended from said attachment means and adapted for receiving an object therein for weighing;

(d)   stabilizer means operative to limit lateral movement and rotation about a vertical axis of said cage with respect to said support structure;

(e)   electrically energizable means operative to sense, upon entry of an object to be weighed in said cage, the differential bending strain occurring in said cantilevered weigh bar between two longitudinal stations spaced a predetermined distance therealong and operable to provide, upon energization, a signal indicative of said differential strain; and,

(f)   circuit means operable to receive said signal and provide an indication of the weight in said cage.

Claim 8.   The device defined in claim 7, wherein said stabilizer means comprises at least one pair of spaced radius rods having one end of each pivotally attached to said support structure and the other end pivotally connected to said cage.

Claim 9.   The device defined in claim 7, wherein said electrically energizable means includes a strain gauge located at each of said longitudinal stations.

Claim 10.   The device defined in claim 7, wherein:

(a)   said electrically energizable means includes a strain gauge located at each of said longitudinal stations; and,

(b)   said circuit means includes means operative to provide a digital readout of said weight.

Fig.1

Fig.2

2/2

Fig. 3

Fig. 4

European Patent Office

**EUROPEAN SEARCH REPORT**

## DOCUMENTS CONSIDERED TO BE RELEVANT

| Category | Citation of document with indication, where appropriate, of relevant passages | Relevant to claim |
|---|---|---|
| | <u>GB - A - 1 407 195</u> (M. BARTON)<br>* Page 2, lines 37-40; page 3, lines 50-79; figure 6 *<br><br>-- | 1,3-10 |
| | <u>GB - A - 1 504 687</u> (C.S.J. SPARKES)<br>* Page 1, lines 9-12; page 1, line 51 - page 2, line 40; figure 1 *<br><br>-- | 1-5,7, 8 |
| | <u>GB - A - 828 541</u> (D.L. HUMPHREYS et al.)<br>* Page 1, lines 9-17; page 1, line 52 - page 2, line 22; figures *<br><br>-- | 1-5,7, 8 |
| | <u>GB - A - 2 009 940</u> (C. WILLETTS et al.)<br>* Page 1, lines 7-11, 84-107; figure 1 *<br><br>-- | 1,6,7, 9,10 |
| | <u>US - A - 3 321 964</u> (W.H. KOOMAN)<br>* Column 1, line 59 - column 2, line 70; figures 1-5a *<br><br>-- | 1,6,7, 9,10 |
| | <u>GB - A - 859 630</u> (M.N. WEBER)<br>* Page 1, lines 19-68; page 1, line 81 - page 2, line 99; figures 1,2,4 *<br><br>--<br><br>./. | 1,6,7, 9,10 |

**CLASSIFICATION OF THE APPLICATION (Int. Cl.³)**

G 01 G 17/08
3/14

**TECHNICAL FIELDS SEARCHED (Int. Cl.³)**

G 01 G 17/08
3/14
G 01 L 1/22

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 04-09-1981 | NENTWICH |

EPO Form 1503.1 06.78

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| | <u>GB - A - 2 009 943</u> (G. DAVISON et al.)<br><br>   * Page 1, lines 45-64; figures 1-3 * <br><br>   ---- | 1,6,7,<br>9,10 | |
| | | | TECHNICAL FIELDS SEARCHED (Int. Cl.³) |